(19) Europäisches Patentamt
European Patent Office
Office européen des brevets

(11) Publication number: **0 283 237 B1**

(12) **EUROPEAN PATENT SPECIFICATION**

(45) Date of publication of patent specification: **29.09.93**

(51) Int. Cl.[5]: **C08L 67/02**, C08L 23/26, C08L 51/04, C08L 51/06, H01B 3/42

(21) Application number: **88302230.3**

(22) Date of filing: **15.03.88**

(54) **The use of a halogen-containing polyester resin composition for covering electric wires.**

(30) Priority: **16.03.87 JP 60755/87**

(43) Date of publication of application:
**21.09.88 Bulletin 88/38**

(45) Publication of the grant of the patent:
**29.09.93 Bulletin 93/39**

(84) Designated Contracting States:
**DE FR GB**

(56) References cited:
**DE-A- 2 441 538**
**FR-A- 2 512 825**

**PATENT ABSTRACTS OF JAPAN, vol. 3, no. 32 (C-40) (60), 17th March 1979; & JP-A-54 6048**

(73) Proprietor: **POLYPLASTICS CO. LTD.**
**30, Azuchimachi 2-chome**
**Higashi-ku Osaka-shi Osaka(JP)**

(72) Inventor: **Iiyama, Makoto**
**338-6, Yunoki**
**Fuji-shi Shizuoka(JP)**
Inventor: **Nakane, Toshio**
**885-11, Miyajima**
**Fuji-shi Shizuoka(JP)**
Inventor: **Hijikata, Kenji**
**8-8 Fujimidai**
**Mishima-shi Shizuoka(JP)**
Inventor: **Kojima, Matsushi**
**885-11 Miyajima**
**Fuji-shi Shizuoka(JP)**
Inventor: **Mochizuki, Mitsuhiro**
**945-3, Tenma**
**Fuji-shi Shizuoka(JP)**

(74) Representative: **Taylor, Phillip Kenneth et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 283 237 B1

## Description

The present invention relates to a covering material for electric wires and, more particularly, to a polyester resin composition comprising a copolybutylene terephthalate containing a halogenated compound and, in mixture therewith an olefin copolymer having an unsaturated carboxylic acid and/or its derivative graft polymerized therein, which is not liable to lose its flexibility characteristics even after long-time exposure to heat and which has good flame retarding property, and also to an electric wire covered with the said resin composition.

Hitherto, rubber, polyvinyl chloride, polyethylene, polypropylene, nylon, and the like have been used as covering materials for electric wires, and among them, polyvinyl chloride has been most largely used as such. Recently, circumstances in which these covering materials are used have become increasingly severe, and accordingly such covering materials are now required to meet higher performance requirements, such as improved thermal and electrical properties, coupled with the requirements for flame retardancy and thin workability for realization of space saving. More particularly, along with the current trend for sophisticated information integration, it has become more and more important to achieve thin processability.

Fluoroplastics and crosslinked polyethylenes meet these requirements to some extent, but they do not adapt well to thin processability. Further, fluoroplastics are rather expensive. Consequently, they are still far from being satisfactory.

Polyethylene terephthalates and polybutylene terephthalates are attracting attention in that they have good thin processability and further in that they exhibit good mechanical strength (e.g. flexibility and wear resistance), high heat resistance and good electrical properties even in the form of thin coatings.

These polyalkylene terephthalates are not, however, flame retardant per se, and because flexibility is sacrificed by addition of a flame retarder it has been considered extremely difficult in the case of thin coatings to meet the requirements for both flame retardancy and good mechanical strength. Copolyesters having a certain ester-forming halogenated compound incorporated therein (EP-A-0284201) have been found to satisfy the requirements for flame retardancy concurrently with those for mechanical strength (wear resistance, flexibility, etc.) in the form of thin coatings. However, while such halogenated copolyesters were found to reduce the possibility of flexibility degradation due to heat treatment as compared with conventional crystalline polyesters, they have the disadvantage that when subjected to higher temperatures for very long periods (e.g., more than 500 hours at more than 120 °C) a degradation in their flexibility occurs. Therefore, such halogenated copolyesters find only limited application where long-term service at locations adjacent a source of heat or in a circumstance subject to heat accumulation is involved.

FR-A- 2512825 and its equivalent GB-A,B 2121060 discloses flame-retardant polyester resin compositions having improved impact properties which comprise (1) a halogen-containing copolymeric polyester resin derived from terephthalic acid or its derivative, an alkylene glycol or its derivative and a halogen-containing aromatic diol, and (2) a minor amount of a modified ethylene copolymer derived by graft polymerization of an $\alpha,\beta$-unsaturated carboxylic acid or its derivative on the backbone of ethylene/$\alpha$-olefin copolymer, and/or a minor amount of an acrylic rubber.

The problem of obtaining a covering material which is not liable to lose its flexibility even when exposed to heating for very long periods, and which is also highly flame retardant and is able to exhibit excellent mechanical properties (wear resistance and flexibility) and electrical properties even when in the form of thin coatings has still not been solved. It has now been found that such a covering material can be provided by incorporating a certain compound by admixture into a halogen-containing flame retardant aromatic copolyester.

Accordingly the present invention concerns the use of a halogen-containing polyester resin composition comprising a flame retardant aromatic polyester copolymer having a halogen content of 0.5 to 30% by weight which is produced by condensation polymerization reaction of

(A) an aromatic dicarboxylic acid of which at least 80 mol % or more is a terephthalic acid or an ester-forming derivative thereof,

(B) a diol of which at least 80 mol % or more is a 1,4-butane diol or ester-forming derivative thereof, and

(C) an ester-forming compound containing a halogen, and characterised in that said polyester copolymer has mixed therewith 1 - 40% by weight based on the total weight of the composition, of an olefin copolymer having an unsaturated carboxylic acid and/or its derivative graft polymerized therein, for covering electric wire.

The composition used in the present invention comprises 60 to 99 percent by weight of the aromatic polyester copolymer and 1 to 40 percent by weight of the olefin copolymer.

It is known in the art to improve the flexibility and impact resistance of a crystalline polyalkylene terephthalate by admixing an elastomer therewith. Since a halogenated copolyester, a material which provides flame retardancy concurrently with wear resistance and flexibility when a thin coating is required, has in itself flexibillity characteristics, it is not necessary to add an elastomer simply for flexibility improvement. However, a combination of a halogenated copolyester and an olefin copolymer having an unsaturated carboxylic acid or its derivative graft polymerized therein exhibits unexpectedly good flexibility characteristics after long-term heat exposure, which are not apparent when an ordinary elastomer is admixed with a crystalline polyalkylene terephthalate.

The polyester copolymer composition used in the present invention will now be described in detail.

Referring first to the constituents of the aromatic polyester copolymer which is the principal component of the electric wire covering composition according to the invention, constituent (A) is an aromatic dicarboxylic acid in which at least 80 mol% or more thereof is terephthalic acid or an ester-forming derivative thereof.

Besides such terephthalic acid or its ester-forming derivative, the following compounds may be supplementarily used as required: dicarboxylic acids, such as isophthalic acid and naphthalene dicarboxylic acid, or their derivatives, aliphatic acids, such as adipic acid, sebacic acid, trimellitic acid, and succinic acid, or their ester-forming derivatives, and aromatic hydroxycarboxylic acids, such as hydroxybenzoic acid and hydroxynaphthoic acid, or their ester-forming derivatives.

Constituent (B) of the polyester copolymer of the invention is a diol in which at least 80 mol% or more thereof consists of 1,4-butane diol or its ester-forming derivatives. Besides 1,4-butane diol, other diols which may be supplementarily used as required are typically low molecular weight glycols of $C_2$ - $C_8$, such as, for example, ethylene glycol, 1,3-propane diol, 1,4-butene diol, 1,6-hexane diol, and 1,8-octane diol. It is possible to incorporate such high molecular weight glycols as polyalkylene oxide glycols. Examples of such glycols are polyethylene oxide glycols, and polybutylene oxide glycol. The incorporation of such high molecular weight glycol(s) is helpful in improving the extensibility of the aromatic polyester as an electric wire covering material of the invention, thereby providing the material with good flexibility. Further, constituent (B) may incorporate, as an auxiliary ingredient, aromatic alcohols, such as bisphenol A, 4,4′-dihydroxy biphenyl, phosphinic acids having an aromatic diol group, alkylene oxide adduct alcohols, such as an ethylene oxide 2-mol adduct of bisphenol A, and a propylene oxide 2 mol adduct of bisphenol A and polyhydroxy compounds, such as glycerine and pentaerythritol, or their ester-forming derivatives.

The polyester copolymer used in the invention is an aromatic polyester copolymer which incorporates, as constituent (C), a halogen-containing ester-forming compound in the form of a monomer, whereby a halogen is combined into its molecule. Examples of halogen-containing ester forming compounds useful for this purpose are illustrated below. For the halogen, bromine is particularly preferred.

(1) 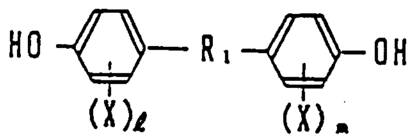

(2) 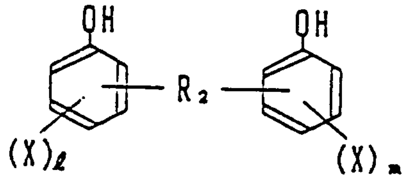

(3) 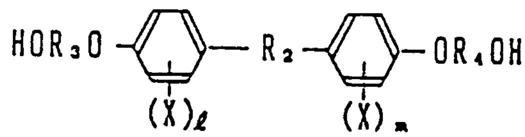

(4) 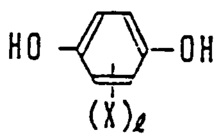

(5) 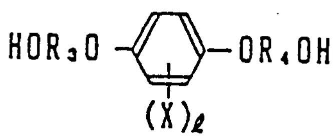

(6) 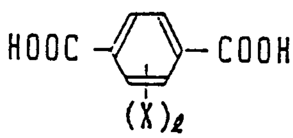

(7) 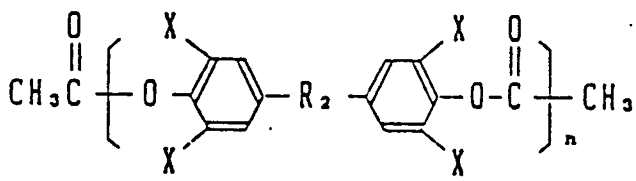

(8) 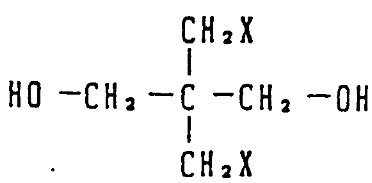

where,

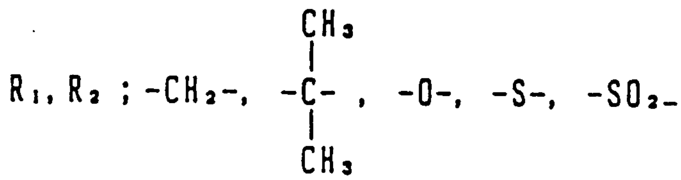

$R_3$, $R_4$ ; $-C_2H_4-$, $-C_3H_6-$, $-(C_2H_4O)_n-$,$-(C_3H_6O)_n-$

X: a halogen

ℓ, m: 1 - 4

n: an integer of 1 or above

Preferred halogen compounds for incorporation in the copolymer are those having at least one aromatic ring in the molecule. Examples of such compounds are those of the general formulae (1) to (7). Where the halogen is bromine, examples of compounds coming under general formula (1) are tetrabromo bisphenol A, and tetrabromo bisphenol sulfone; an example under general formula (2) is tetrabromo bisphenol F; examples under general formula (3) are an ethylene oxide 2 mol adduct of tetrabromo bisphenol A, a propylene oxide 2 mol adduct of tetrabromo bisphenol A, an ethylene oxide 2 mol adduct of tetrabromo bisphenol sulfone, and a propylene oxide 2 mol adduct of tetrabromobisphenol sulfone; an example under general formula (4) is tetrabromo hydroquinone; an example under general formula (5) is an ethylene oxide 2 mol adduct of tetrabromo hydroquinone; an example under general formula (6) is tetrabromo terephthalic acid, and an example under general formula (7) is a polycarbonate of tetrabromo bisphenol A.

The molecular weight of the halogenated monomer incorporated in the copolymer composition should be preferably more than 390. If the molecular weight is smaller, the compound will not contribute toward improvement in the oxygen index, and indication of flame retardancy; therefore, it is desirable that at least one or more aromatic rings be contained in the monomer molecule.

The halogen-containing monomer is added so that the halogen content of the copolyester produced is 0.5 to 30% by weight, preferably 2 to 20% by weight. If the halogen content is less than 0.5% by weight, insufficient flame retardancy may be obtained; and if it is more than 30% by weight, the result is unfavourable because the mechanical properties are adversely affected.

Proportions of the monomers for preparation of the polyester component used in the invention should be such that where the ester-forming functional group of the halogen compound as constituent (C) is alcoholic, the proportion of constituents (B) + (C) be 90 - 200 mol, preferably 95 - 150 mol, in relation to 100 mol of constituent (A). If the ester forming functional group of the halogen compound as constituent (C) is a carboxylic acid, the proportion of constituent (B) should be 90 - 200 mol, preferably 95 - 150 mol, in relation to 100 mol of constituents (A) + (C).

If a covering material having a higher oxygen index is required depending upon the service conditions, the halogen content of the copolymer may be adjusted by suitably determining the proportion of constituent (C), whereby the desired oxygen index can be satisfied.

The olefin copolymer used in the invention, wherein an unsaturated carboxylic acid and/or its derivative is graft-polymerized, will now be described further.

For the polyolefin resin, such sole polymers and copolymers as polyethylene, polypropylene, polybutene, and polymethyl pentene are mentioned.

Examples of copolymer ingredients are:

as α-olefin component units, propylene, 4-methyl-1-pentene, 1-hexene, 1-octene, 1-decene, and 1-dodecene. For diene component units, non-conjugate diene components, such as 1-4-hexadiene, dicyclopentadiene, 5-ethylidene-2-norbornene, and 2,5-norbornadiene, and conjugate diene components, such as butadiene, isoprene, and piperylene, are mentioned.

It is possible to incorporate a polar vinyl monomer into the copolymer.

For polar vinyl monomer component units, vinyl acetate, acrylic acid, metacrylic acid, acrylate, metacrylate, metallic salts of acrylic acid, and metallic acids of metacrylic acid are mentioned.

Of these, ethylene/α-olefin copolymers are preferred, and by way of example the following are mentioned as such: two-component systems, such as ethylene/propylene copolymer, ethylen/1-butene copolymer, ethylene/4-methyl-1-pentene copolymer, ethylene/1-hexene copolymer, ethylene/1-octene copolymer, and ethylene/1-decene copolymer; and three-component systems, such as ethylene/propylene/1,4-hexadiene copolymer, ethylene/propylene/dicyclopentadiene copolymer,

ethylene/porpylene/5-ethylidene-2-norbornene copolymer, ethylene/1-butene/dicyclopentadiene copolymer, and ethylene/1-butene/5-ethylidene-2-norbornene copolymer.

The monomer for grafting purposes is an unsaturated carboxylic acid and/or its derivative. Examples of such monomer are $\alpha,\beta$-ethylene type unsaturated carboxylic acids, such as maleic acid, fumaric acid, and itaconic acid, and/or their anhydride, and ester, amide, and imide compounds; also, insaturated monocarboxylic acids, such as acrylic acid, metacrylic acid, and/or their ester compounds.

Of these graft monomers, maleic acid and/or maleic acid anhydride is particularly preferred.

Such graft monomer is preferably one in which it is graft polymerized within the range of 0.001 - 10 parts by weight relative to 100 parts by weight of polyolefin. If the proportion is less than 0.001 part by weight, no good effect is obtainable, and if it is more than 10 parts by weight, gelation is likely to occur in the stage of melt extrusion.

The crystallinity of the grafted polyolefin should be reasonably low from the standpoint of flexibility. It is preferably less than 40%, more preferably less than 30%, most preferably less than 10%.

For such grafted polyolefin, those produced by known graft polymerization techniques (for example, methods disclosed in Japanese Provisional Patent Publication No. 28092 of 1973, No. 46689 of 1973, and No. 52840 of 1973). A grafted polyolefin which is graft polymerized to a high concentration but which is concentration-adjusted by being diluted with an ungrafted polyolefin may also be used. Commercially available grafted polyolefins, such as, for example, "Admer", "N-Tufmer" (produced by Mitsui Petrochemical), and "Modic" (produced by Mitsubishi Petrochemical Co.), may be used.

The proportion of the graft olefin copolymer is preferably 1 - 40% by weight, more preferably 5 - 30% by weight, relative to the total weight of the composition. If the proportion is less than 1% by weight, no good effect is obtainable. If it is more than 40% by weight, the surface of the covering material will be excessively rough when it is melt extruded and, in addition, the extensibility of the halogenated copolyester is considerably affected.

The covering material of the present invention exhibits excellent performance characteristics on its own without the use of any additive. However, in order to further improve its performance characteristics, the covering material may, as required, incorporate stabilizers, such as thermal stabilizer, antioxidant, and ultraviolet light absorber, antistatic agents, flame retarding agents, flame retarding auxiliaries, colorants, such as dyes and pigments, and lubricants, lubricating agents, crystallization accelerators (nucleating agents), inorganic substances, and the like for fludity and releasability improvement.

For stabilization purposes, hindered phenolic, amine, and phosphoric compounds may be used.

Examples of hinered phenolic compounds are 2,2′-methylene-bis(4-methyl-6-t-butylphenol), hexamethylene glycol-bis(3,5-di-t-butyl-4-hydroxy hydrocinnamate), tetrakis[methylene(3,5-di-t-butyl-4-hydroxy hydrocinnamate)] methane, triethylene glycol-bis-3-(3-t-butyl-4-hydroxy-5-methylphenyl)prpionate, 1,3,5-trimethyl-2,4,6-tris(3,5-di-t-butyl-4-hydroxybenzyl)benzene, n-octadecyl-3-(4′-hydroxy-3′5′-di-t-butyl-phenol) propionate, 4,4′-methylene-bis(2,6-di-t-butylphenol), 4,4′-butylidene-bis(6-t-butyl-3-methylphenol), 2,2′-thiodiethyl-bis[3-(3,5-di-t-butyl-4-hydroxyphenyl)propionate, distearyl-3,5-di-t-butyl-4-hydroxy benzyl phosphonate, and 2-t-butyl-6-(3-t-butyl-5-methyl-2-hydroxybenzyl)-4-methylphenyl acrylate; at least one or more kinds of such compounds may be used. Of these compounds, hexamethylene glycol-bis(3,5-di-5-butyl-4-hydroxy hydrocinnamate), tetrakis [methylene(3,5-di-t-butyl-4-hydroxy hydrocinnamate)] methane, and triethylene glycol-bis-3(3-t-butyl-4-hydroxy-5-methylphenyl)propionate are particularly prefered.

Examples of amine compounds are N-phenyl-N′-isopropyl-p-phenylene diamine, N,N′-diphenyl-p-phenylene diamine, 4,4′-bis(4-$\alpha$, $\alpha$-dimethyl benzyl) diphenylamine, condensation reaction products of diphenyl amine and acetone, N-phenyl naphthylamine, and N,N′-di-$\beta$-naphthyl phenylenediamine.

Examples of phosphoric compounds are phosphonite compounds expressed by the general formula:

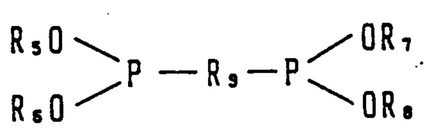

(9)

where, $R_5$, $R_6$, $R_7$, and $R_8$ represent alkyl groups, substituted alkyl groups, aryl groups, or substituted aryl groups, each having 1 - 25 carbon atoms; each of them may be identical with or different from the others. Examples of these groups are methyl, ethyl, butyl, octyl, decyl, lauryl, tridecyl, stearyl, phenyl, and alkyl- and/or alkoxy-substituted phenyl groups. $R_9$ represents an alkylene, substituted alkylene, arylene, or substituted arylene group having 4 - 33 carbon atoms. Examples of such group are butylene, octylene,

phenylene, naphthylene, diphenylene groups, and groups expressed by the following formula:

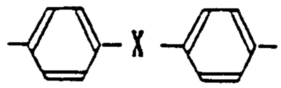

(where, X represents an oxy group, a sulfonyl group, a carbonyl group, a methylene group, an ethylidene group, a butylidene group, and isopropylene group, or a diago group). A particularly preferred phosphonite compound is tetrakis(2,4-di-t-butylphenyl)-4,4′-diphenylene phosphonite.

The proportion of such stabilizer may be 0.05 - 5% by weight, preferably 0.1 - 3% by weight, relative to the total weight of the composition.

For use as flame-retarding auxiliaries, metallic compounds containing zine and bismuth, magnesium hydroxide, and clay-type silicates, such as asbestos, are mentioned as well as antimony compounds, such as antimony trioxide and antimony halide.

Examples or inorganic substances are such inorganic fibers as glass fiber, ceramic fiber, boron fiber, potassium titanate fiber, and asbestos; such powdery and grannular materials as calcium carbonate, highly dispersible silicate, alumina, aluminum hydroxide, talc, clay, mica, glass flakes, glass powder, glass beads, quartz powder, silica sand, wollastonite, carbon black, barium sulfate, plaster of paris, silicon carbide, alumina, boron nitride, and silicon nitride; lamellar inorganic compounds; and whiskers.

These inorganic fillers may be used either in one kind alone or in a combination of two or more kinds.

Further, in order to improve the melt-extrusion covering, lubricating, and flexibility properties of the covering material, one or more kinds of organic polymeric materials may be supplementarily used for admixture. Examples of such polymeric materials are other types of polyesters, polyamides, polyolefins, and their copolymers, low molecular-weight-polyethylenes, polycarbonates, polyurethanes, rubber-like polymeric materials, such as butyl rubber and ABS, multiphase copolymers composed of polyacrylate resins, and thermoplastic segment-type copolyesters (including graft copolymers). The proportion of such organic polymeric material is preferably less than that of the aforesaid olefin copolymer; generally, it is desirable that such polymeric material be added in a proportion of not more than 20% by weight relative to the total weight of the composition.

The resin composition according to the invention can be produced by any known method of blending. For example, a halogenated polyester and a grafted polyolefin are blended in predetermined proportions in a mixer, and the mixture is melt-extruded into a pellet.

Electric wires may be coated with the covering material of the present invention by known methods. Usually, the covering material is continuously coated onto a conductor concurrently with continuous production of the latter by melt-extrusion. There are two techniques for effecting such continuous coating, one in which the direction of movement of the conductor and the direction of extrusion of the covering material are co-lineal, and the other in which a cross head having a certain angle to the screw axis is employed. The coated electric wire of the present invention can be manufactured in either way.

For the extrusion, it is desirable to use a screw-type extruder which provides easy control of the flow of the covering material.

Thickness irregularities of the covering material may be detected by any known method, such as X-ray or ultrasonic means.

Eccentricity of the covering material due to thickness irregularity is expressed in terms of concentricity percentage ec. The greater the concentricity ec, the better; it is preferably more than 65%, more preferably more than 70%.

$$ec = \frac{emin}{emax} \times 100$$

emin: minimum thickness of sections of the covering.

emax: maximum thickness of sections of the covering.

Thickness irregularity control can be effected by detecting irregularities by means of an eccentricity detector and automatically or manually adjusting the clearance between the die and the conductor at a die center portion of the screw-type extruder accordingly, or by adjusting the flow rate of the covering material in conjunction with pressure and temperature control.

The use of a non-eccentric head with the die is effective in minimizing thickness irregularities.

In the process of wire manufacturing, in order to further increase the mechanical strength of the covering material, if desired, the covering material may be passed through a heating zone after it is coated on the wire and shaped. The temperature of the heating zone should be less than the melting point of the coating material and more than the glass transition point thereof.

The composition of the present invention has the following advantages:-

(1) It is not liable to deterioration in properties, in particular flexibility, due to a thermal history and, more particularly, to long-time heat treatment.

(2) It has sufficient flame retardancy without incorporation of a flame retarding agent. Being free from the possibility of flame-retarder bleeding, the composition provides good surface configuration and eliminates wire-to-wire blocking possibilities in the process of wire manufacturing.

(3) It provides good wear resistance even when thinly coated, and therefore the composition facilitates thickness reduction for space saving.

Because of these characteristics, the covering material of the invention can be advantageously used in the manufacture of electric wires for use in various fields of application, such as transport equipment, electric and electronic information equipment, and machinery.

## (Examples)

The invention will be described further with reference to the following examples. Copolymers P and Q were prepared in the following manner.

### Preparation Example 1 (Preparation of Copolymer P)

Into a reactor having an agitator, a nitrogen introduction pipe, and a distillation pipe were charged 970 parts by weight of dimethyl terephthalate, 513 parts of 1,4-butane diol, 158 parts by weight of an ethylene oxide 2 mol adduct of tetrabromo-bisphenol A, and 0.7 parts by weight of tetrabutoxy titanium, and the mixture was stirred under nitrogen gas stream at 160°C for 30 minutes. The temperature was gradually raised and the mixture was heated at temperatures of 200°C to 270°C under stirring for 2 hours. Then, after nitrogen introduction was discontinued, the reactor was gradually subjected to pressure reduction so that the pressure in the reactor was reduced to 0.3 mmHg in 30 minutes, and agitation was carried out under this pressure for 3 hours. The polymer thus obtained had an inherent visconsity of 1.0 and a bromine content of 6.5% by weight.

### Preparation Example 2 (Preparation of Copolymer Q)

Into a reactor having an agitator, a nitrogen introduction pipe, and a distillation pipe were charged 970 parts by weight of dimethyl terephthalate, 513 parts by weight of 1,4-butane diol, 171 parts by weight of a propylene oxide 2 mol adduct of tetrabromo-bisphenol sulfone, and 0.7 part by weight of tetrabutoxy titanium, and the mixture was stirred under a nitrogen gas stream at 160°C for 30 minutes. The temperature was gradually raised and the mixture was heated at temperatures of 200°C - 270°C under stirring. Then, after nitrogen introduction was discontinued the reaction was gradually subjected to pressure reduction so that the pressure in the reactor was reduc-d to 0.3 mmHg in 30 minutes, and agitation was carried out under this pressure at 270°C for 3 hours. The polymer thus obtained had an inherent viscosity of 1.1 and a bromine content of 6.3% by weight.

### Example 1

Twenty-five parts by weight of a modified ethylene polymer having a crystallinity of less than 10% in which maleic acid was grafted was admixed with 75 parts by weight of copolymer P, and by employing a conventional extruder the mixture was melt-mixed and extruded into a pellet. By employing an injection molding machine, test specimens were prepared from the pellet so obtained, in conventional way. The specimens were evaluated as to their properties.

Property evaluation was made according to the following mathods:

Tensile strength and elongation (%) measurements were made according to ASTM D 638. Dielectric breakdown tests were carried out according to the short-term method of ASTM D 149, and dielectric constant measurements were made according to DISO 1 kHz. For flame retardancy, tests were carried out in accordance with UL-94V, and where flame died out within 30 seconds, the specimens were rated o, and where flame did not die out, specimens were rated x. Oxygen index measurements were made according to

JIS K 7201. Surface configuration evaluation was carried out by observing the surface condition of each specimen after 24 hour exposure to heat at 120°C; and specimens with which abnormalities, such as surface peel and bleed, were found were rated x, those with which some partial surface abnormality was found were rated Δ, and those with which no abnormality was found were rated o.

Tensile test specimens were kept in a temperature controlled bath at 120°C and, after 500 hours, they were likewise examined in respect of elongation and retained extensibility.

Retained extensibility measurements were expressed in terms of extensibility percentage after 500 hours as against pre-heat aging extensibility of 100.

Test results are shown in Table 1.

Example 2

Test specimens were prepared and evaluated in same way as in Example 1, except that copolymer Q was used. Test results are shown in Table 1.

Example 3

Test specimens were prepared and evaluated in same way as in Example 1, except that copolymer P was used with a different proportion of the maleic acid-grafted olefin. Test results are shown in Table 1.

Comparative Examples 1 and 2

Copolymers P and Q were separately tested alone. Test results are shown in Table 1.

Comparative Example 3

Twenty-five parts by weight of an ethylene propylene rubber (EP rubber), unmodified with maleic acid or the like, were admixed with 75 parts by weight of copolymer P, and test specimens were prepared from the resulting composition and evaluated in same way as in Example 1. Test results are shown in Table 1.

Comparative Example 4

A composition comprising copolymer P and an excessive proportion of a maleic acid-grafted olefin was tested in same way. Test results are shown in Table 1.

Table 1

| | | Example | | | Comp Example | | | |
|---|---|---|---|---|---|---|---|---|
| | | 1 | 2 | 3 | 1 | 2 | 3 | 4 |
| Resin Composition | Resin used (wt parts) | P 75 | Q 75 | P 95 | P 100 | Q 100 | P 75 | P 50 |
| | Maleic acid-grafted olefin (wt parts) | 25 | 25 | 5 | - | - | - | 50 |
| | E P rubber (wt parts) | - | - | - | - | - | 25 | - |
| Dielectric breakdown (kV/mm) | | 17 | 17 | 17 | 17 | 17 | 17 | 18 |
| Dielectric constant | | 3.1 | 3.1 | 3.2 | 3.2 | 3.2 | 3.0 | 2.9 |
| Flame retardancy | | o | o | o | o | o | o | o |
| Oxygen index | | 25 | 25 | 27 | 27 | 27 | 25 | 24 |
| Surface configuration | | o | o | o | o | o | x | |
| Tensile strength (kg/cm$^2$) | | 320 | 335 | 470 | 543 | 550 | 290 | 137 |
| Elongation (%) | | 280 | 275 | 320 | 350 | 345 | 105 | 122 |
| After 500 hr exposure at 120°C | Elongation(%) | 274 | 272 | 240 | 77 | 79 | 20 | 134 |
| | Retained extensibility (%) | 98 | 99 | 75 | 22 | 23 | 19 | 110 |

## Claims

1. The use of a halogen-containing polyester resin composition comprising a flame retardant aromatic polyester copolymer having a halogen content of 0.5 to 30% by weight which is produced by condensation polymerization reaction of

(A) An aromatic dicarboxylic acid of which at least 80 mol % or more is a terephthalic acid or an ester-forming derivative thereof,

(B) a diol of which at least 80 mol % or more is 1.4-butane diol or an ester-forming derivative thereof, and

(C) an ester-forming compound containing a halogen,

and in which said polyester copolymer has mixed therewith, 1 to 40% by weight based on the total weight of the composition of an olefin copolymer having an unsaturated carboxylic acid and/or its derivative graft polymerized therein, for covering electric wires.

2. The use as claimed in claim 1, characterised in that the halogen-containing ester forming compound (C) has at least one aromatic ring in its molecule.

3. The use as claimed in claim 1 or 2, characterised in that the halogen is bromine.

4. The use as claimed in any one of claims 1 to 3, characterised in that the olefin copolymer is one in which 0.001 to 10 parts by weight of an unsaturated carboxylic acid are graft polymerized in relation to 100 parts by weight of polyolefin.

5. The use as claimed in any of claims 1 to 4, characterized in that the electric wire is an automotive low-voltage wire.

**Patentansprüche**

1. Die Verwendung einer halogenhaltigen Polyesterzusammensetzung, welche ein flammhemmendes, aromatisches Polyestercopolymer mit einem Halogengehalt von 0,5 bis 30 Gew.-% enthält, welches durch eine Kondensationspolymerisationsreaktion von
   (A) einer aromatischen Dicarbonsäure, von welcher zumindest 80 Mol-% oder mehr Terephthalsäure oder ein esterbildendes Derivat hiervon ist,
   (B) einem Diol, von welchem mindestens 80 Mol-% oder mehr ein Butan-1,4-diol oder ein esterbildendes Derivat hiervon ist, und
   (C) einer esterbildenden, halogenhaltigen Verbindung,
   und in welcher dem genannten Polyestercopolymer 1 - 40 Gew.-% - bezogen auf das Gesamtgewicht der Zusammensetzung - eines Olefincopolymers zugemischt sind, welches eine ungesättigte Carbonsäure und/oder das Derivat hiervon mittels Pfropfpolymerisation anpolymerisiert hat, zum Überziehen von elektrischem Draht.

2. Die Verwendung wie in Anspruch 1 beansprucht, dadurch gekennzeichnet, daß der halogenhaltige Ester, der die Verbindung (C) bildet, mindestens einen aromatischen Ring in seinem Molekül hat.

3. Die Verwendung wie in Anspruch 1 oder 2 beansprucht, dadurch gekennzeichnet, daß das Halogen Brom ist.

4. Die Verwendung wie in einem der Ansprüche 1 bis 3 beansprucht, dadurch gekennzeichnet, daß das Olefincopolymer eines ist, in welches 0,001 - 10 Gewichtsteile - bezogen auf 100 Gewichtsteile Polyolefin - einer ungesättigten Carbonsäure mittels Pfropfpolymerisation eingebaut sind.

5. Die Verwendung wie in irgendeinem der Ansprüche 1 bis 4 beansprucht, dadurch gekennzeichnet, daß der elektrische Draht ein Niedervoltdraht für die Kraftfahrzeugtechnik ist.

**Revendications**

1. Utilisation d'une composition de résine polyester halogénée comprenant un copolyester aromatique retardateur de flamme ayant une teneur en halogène de 0,5 à 30 % en poids qui est produit par une réaction de polycondensation de
   (A) un acide dicarboxylique aromatique dont au moins 80 mol % ou plus consistent en acide téréphtalique ou un dérivé estérifiable de celui-ci,
   (B) un diol dont au moins 80 mol % ou plus consistent en 1,4-butanediol ou un dérivé estérifiable de celui-ci, et
   (C) un composé estérifiable contenant un halogène,
   et dans laquelle il est mélangé audit copolyester 1 à 40 % en poids, par rapport au poids total de la composition, d'un copolymère d'oléfine dans lequel un acide carboxylique insaturé et/ou un dérivé de celui-ci est polymérisé par greffage, pour le gainage de fils électriques.

2. Utilisation telle que revendiquée dans la revendication 1, caractérisée par le fait que le composé estérifiable halogéné (C) contient au moins un noyau aromatique dans sa molécule.

3. Utilisation telle que revendiquée dans la revendication 1 ou 2, caractérisée par le fait que l'halogène est le brome.

4. Utilisation telle que revendiquée dans l'une quelconque des revendications 1 à 3, caractérisée par le fait que le copolymère d'oléfine est un tel copolymère dans lequel 0,001 à 10 parties en poids d'acide carboxylique insaturé sont polymérisées par greffage pour 100 parties en poids de polyoléfine.

5. Utilisation telle que revendiquée dans l'une quelconque des revendications 1 à 4, caractérisée par le fait que le fil électrique est un fil basse tension pour automobiles.